# EUROPEAN PATENT APPLICATION

(11) **EP 3 434 407 A2**
(43) Date of publication of application: **30.01.2019**
(21) Application number: 18181388.2
(22) Date of filing: 03.07.2018
(51) Int. Cl.: B23K 15/06, B23K 26/12, B23K 26/24, B23K 26/211

(54) **METHODS AND APPARATUS FOR WELDING A FIRST COMPONENT AND A SECOND COMPONENT TOGETHER**

(30) Priority: 28.07.2017 GB 201712152
(71) Applicant: Rolls-Royce plc, London SW1E 6AT (GB)
(72) Inventor: Clark, Daniel, Derby, Derbyshire DE24 8BJ (GB); Grafton-Reed, Clive, Derby, Derbyshire DE24 8BJ (GB)
(74) Representative: Rolls-Royce plc

(57) **Abstract**

A method of welding a first component and a second component together, the method comprising: controlling movement of a first component and/or a second component to form a joint, the first component and the second component defining a first side and a second side; controlling welding of the first component and the second component on the second side using filler to form a seal weld to seal the joint; controlling provision of a vacuum chamber to enclose the joint within a volume; controlling evacuation of the volume defined by the vacuum chamber; and controlling power beam welding of the joint, the power beam being provided from the first side and through the evacuated volume.

## Description

### TECHNOLOGICAL FIELD

The present disclosure concerns methods and apparatus for welding a first component and a second component together.

### BACKGROUND

Welding is manufacturing process for joining two or more objects together by causing fusion at a joint between the two or more objects. Examples of welding methods include: oxy-fuel welding; shielded metal arc welding; gas tungsten arc welding; gas metal arc welding; flux-cored arc welding; submerged arc welding; electroslag welding; and electric resistance welding.

Arc welding is usually used in the manufacture of pressure vessels, such as reactor pressure vessels for nuclear power stations. Pressure vessels usually comprise a plurality of nozzles for enabling a fluid to flow in and out of the pressure vessel. The nozzles are usually arc welded around apertures of the pressure vessel. However, arc welding may cause strain and distortion in the pressure vessel that may reduce the operating life of the pressure vessel.

### BRIEF SUMMARY

According to a first aspect there is provided a method of welding a first component and a second component together, the method comprising: controlling movement of a first component and/or a second component to form a joint, the first component and the second component defining a first side and a second side; controlling welding of the first component and the second component on the second side using filler to form a seal weld to seal the joint; controlling provision of a vacuum chamber to enclose the joint within a volume; controlling evacuation of the volume defined by the vacuum chamber; and controlling power beam welding of the joint, the power beam being provided from the first side and through the evacuated volume.

The power beam weld may partially penetrate the first component and the second component. The power beam weld may not penetrate the seal weld.

The power beam weld may partially penetrate the seal weld.

The filler may be separate to the first component and the second component.

The filler may be integral to the first component and/or be integral to the second component.

The first component may include a first layer comprising a first material and a second layer comprising a second material. The seal weld may be formed on the second layer and may comprise the second material.

The first component may comprise a third material at the joint. The third material may be for strengthening the weld between the first component and the second component.

The first component and the second component may define a cavity at the joint. The method may comprise: controlling welding of the joint, subsequent to power beam welding, to at least partially fill the cavity.

The first component may be a reactor pressure vessel for a nuclear power station. The second component may be a nozzle for the reactor pressure vessel.

The power beam welding may be keyhole welding.

The power beam welding may be laser welding.

The power beam welding may be electron beam welding.

According to a second aspect there is provided a computer program that, when read by a computer, causes performance of the method as described in the preceding paragraphs.

According to a third aspect there is provided a non-transitory computer readable storage medium comprising computer readable instructions that, when read by a computer, cause performance of the method as described in the preceding paragraphs.

According to a fourth aspect there is provided apparatus for welding a first component and a second component together, the apparatus comprising a controller configured to: control movement of a first component and/or a second component to form a joint, the first component and the second component defining a first side and a second side; control welding of the first component and the second component on the second side using filler to form a seal weld to seal the joint; control provision of a vacuum chamber to enclose the joint within a volume; control evacuation of the volume defined by the vacuum chamber; and control power beam welding of the joint, the power beam being provided from the first side and through the evacuated volume.

The power beam weld may partially penetrate the first component and the second component. The power beam weld may not penetrate the seal weld.

The power beam weld may partially penetrate the seal weld.

The filler may be separate to the first component and the second component.

The filler may be integral to the first component and/or may be integral to the second component.

The first component may include a first layer comprising a first material and a second layer comprising a second material. The seal weld may be formed on the second layer and may comprise the second material.

The first component may comprise a third material at the joint. The third material may be for strengthening the weld between the first component and the second component.

The first component and the second component may define a cavity at the joint. The controller may be configured to: control welding of the joint, subsequent to power beam welding, to at least partially fill the cavity.

The first component may be a reactor pressure vessel for a nuclear power station. The second component may be a nozzle for the reactor pressure vessel.

The power beam welding may be keyhole welding.

The apparatus may further comprise a laser. The controller may be configured to control the laser to perform the power beam welding.

The apparatus may further comprise an electron beam emitter. The controller may be configured to control the electron beam emitter to perform the power beam welding.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of apparatus for welding a first component and a second component together according to various examples;
Fig. 2 illustrates a perspective view of a reactor pressure vessel and a nozzle according to an example;
Fig. 3 illustrates a flow diagram of a method for welding a first component and a second component together according to various examples;
Figs. 4A, 4B, 4C and 4D illustrate cross sectional side views of a reactor pressure vessel and a nozzle being welded together according to a first example;
Fig. 5 illustrates a side view of another apparatus for welding a reactor pressure vessel and a nozzle together according to various examples;
Fig. 6 illustrates a cross sectional side view of a reactor pressure vessel and a nozzle welded together according to a second example;
Fig. 7 illustrates a cross sectional side view of a reactor pressure vessel and a nozzle welded together according to a third example;
Fig. 8 illustrates a cross sectional side view of a reactor pressure vessel and a nozzle welded together according to a fourth example; and
Fig. 9 illustrates a cross sectional side view of a reactor pressure vessel and a nozzle welded together according to a fifth example.

### DETAILED DESCRIPTION

In the following description, the terms 'connected' and 'coupled' mean operationally connected and coupled. It should be appreciated that there may be any number of intervening components between the mentioned features, including no intervening components.

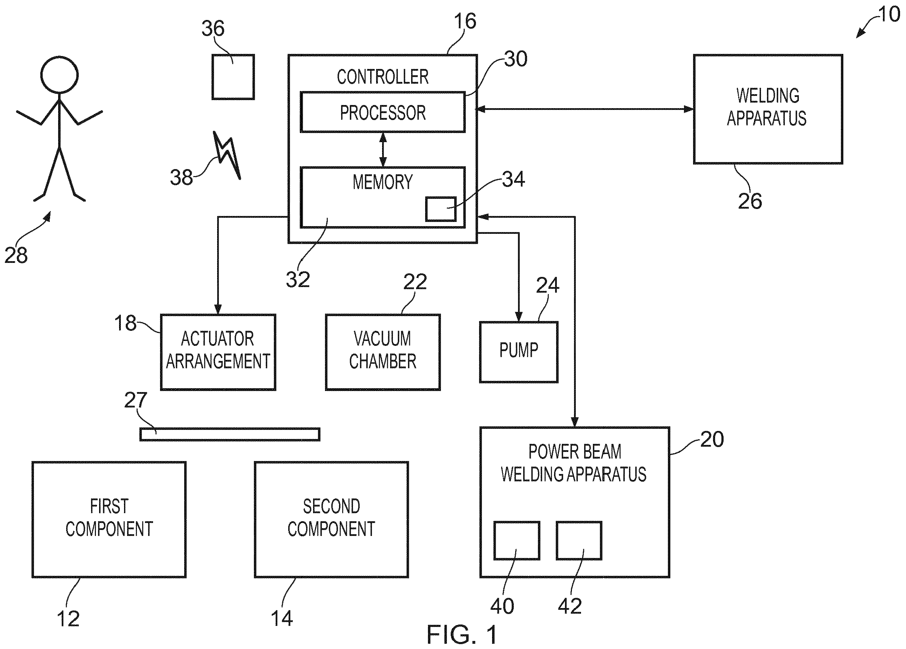

Fig. 1 illustrates a schematic diagram of an apparatus 10 for welding a first component 12 and a second component 14 together according to various examples. The apparatus 10 includes a controller 16, an actuator arrangement 18, power beam welding apparatus 20, a vacuum chamber 22, a pump 24, welding apparatus 26 and filler 27. Fig. 1 also illustrates a human operator 28.

In some examples, the apparatus 10 may be a module. As used herein, the wording 'module' refers to a device or apparatus where one or more features are included at a later time and, possibly, by another manufacturer or by an end user. In one example where the apparatus 10 is a module, the apparatus 10 may only include the controller 16, and the remaining features may be added by another manufacturer, or by an end user. In another example where the apparatus 10 is a module, the apparatus 10 may only include the power beam welding apparatus 20, the vacuum chamber 22 and the pump 24.

In some examples, the apparatus 10 may not include some of the features illustrated in Fig. 1. For example, the apparatus 10 may not include the controller 16, and/or the actuator arrangement 18, and/or the welding apparatus 26.

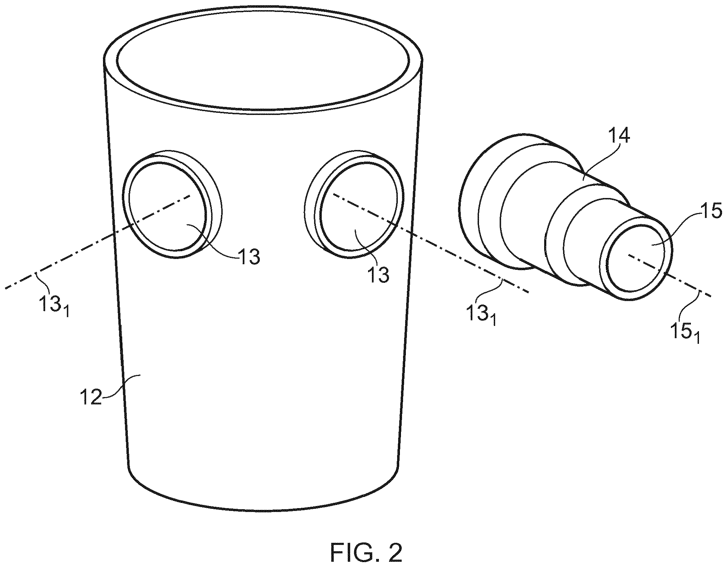

The first component 12 and the second component 14 may be any two objects to be welded together. For example, as illustrated in Fig. 2, the first component 12 may be a reactor pressure vessel (RPV) for a nuclear power station, and the second component 14 may be a nozzle for the reactor pressure vessel. The reactor pressure vessel 12 defines a plurality of apertures 13 that define axes 13₁. The nozzle 14 also defines an aperture 15 that has an axis 15₁. In other examples, the first component 12 and the second component 14 may be components of steam generators, pressurisers, heat exchangers, valves, and pipe branch connections.

The controller 16, the actuator arrangement 18, the power beam welding apparatus 20, the pump 24, and the welding apparatus 26 may be coupled to one another via a wireless link and may consequently comprise transceiver circuitry and one or more antennas. Additionally or alternatively, the controller 16, the actuator arrangement 18, the power beam welding apparatus 20, the pump 24, and the welding apparatus 26 may be coupled to one another via a wired link and may consequently comprise interface circuitry (such as a Universal Serial Bus (USB) socket). It should be appreciated that the controller 16, the actuator arrangement 18, the power beam welding apparatus 20, the pump 24, and the welding apparatus 26 may be coupled to one another via any combination of wired and wireless links.

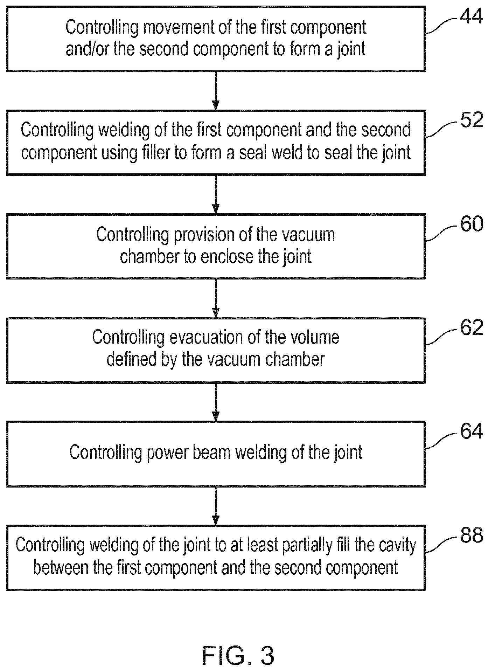

The controller 16 may comprise any suitable circuitry to cause performance of the methods described herein and as illustrated in Fig. 3. The controller 16 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 16 may comprise at least one processor 30 and at least one memory 32. The memory 32 stores a computer program 34 comprising computer readable instructions that, when read by the processor 30, causes performance of the methods described herein, and as illustrated in Fig. 3. The computer program 34 may be software or firmware, or may be a combination of software and firmware.

The processor 30 may include at least one microprocessor and may comprise a single core processor, may comprise multiple processor cores (such as a dual core processor or a quad core processor), or may comprise a plurality of processors (at least one of which may comprise multiple processor cores).

The memory 32 may be any suitable non-transitory computer readable storage medium, data storage device or devices, and may comprise a hard disk drive (HDD) and/or a solid state drive (SSD). The memory 32 may be permanent non-removable memory, or may be removable memory (such as a universal serial bus (USB) flash drive or a secure digital card). The memory 32 may include: local memory employed during actual execution of the computer program; bulk storage; and cache memories which provide temporary storage of at least some computer readable or computer usable program code to reduce the number of times code may be retrieved from bulk storage during execution of the code.

The computer program 34 may be stored on a non-transitory computer readable storage medium 36. The computer program 34 may be transferred from the non-transitory computer readable storage medium 36 to the memory 32. The non-transitory computer readable storage medium 36 may be, for example, a USB flash drive, a secure digital (SD) card, an optical disc (such as a compact disc (CD), a digital versatile disc (DVD) or a Blu-ray disc). In some examples, the computer program 34 may be transferred to the memory 32 via a signal 38 (such as a wireless signal or a wired signal).

Input/output devices may be coupled to the apparatus 10 either directly or through intervening input/output controllers. Various communication adaptors may also be coupled to the controller 16 to enable the apparatus 10 to become coupled to other apparatus or remote printers or storage devices through intervening private or public networks. Non-limiting examples include modems and network adaptors of such communication adaptors.

The actuator arrangement 18 may comprise any suitable actuator, or actuators for moving the first component 12 and/or the second component 14 to form a joint. For example, where the first component 12 includes a reactor pressure vessel and the second component 14 includes a nozzle, the actuator arrangement 18 may comprise one or more cranes for moving the nozzle 14 into abutting contact with the reactor pressure vessel 12. The controller 16 may be configured to control the operation of the actuator arrangement 18 to move the first component 12 and/or the second component 14 to form the joint. In some examples, the actuator arrangement 18 may also be arranged to move the vacuum chamber 22 relative to the first and second components 12, 14.

The power beam welding apparatus 20 is arranged to emit a power beam to weld the first component 12 and the second component 14 together. The power beam welding apparatus 20 may comprise a laser system 40 for emitting a laser beam to weld the first component 12 and the second component 14 together. The laser system 40 may include a laser and optical elements for delivering the emitted laser beam to the first and second components 12, 14. The optical elements may comprise an optical fibre cable, one or more lenses, and one or more mirrors. In some examples, the mirror may be rapidly moved to scan the reflected beam across a programmed raster pattern. In other examples, the laser system 40 may not comprise a mirror.

The power beam welding apparatus 20 may additionally or alternatively comprise an electron beam welding system 42 for emitting an electron beam to weld the first component 12 and the second component 14 together. The electron beam welding system 42 may include a cathode for emitting an electron beam, an anode for generating an electric field to accelerate the electron beam, and an electromagnet arrangement for generating a magnetic field to focus and deflect the electron beam. The controller 16 is configured to control the power beam welding apparatus 20 to weld the first component 12 and the second component 14 together.

In some examples, the power beam welding apparatus 20 may comprise robotics that enable movement of at least a part of the power beam welding apparatus 20 relative to the first and second components 12, 14. For example, the power beam welding apparatus 20 may comprise a continuum robot, and the power beam may be emitted from a free end of the continuum robot. In these examples, the controller 16 is configured to control the robotics of the power beam welding apparatus 20 to move at least a part of the power beam welding apparatus 20.

The vacuum chamber 22 may have any suitable shape and dimensions to enclose the joint formed by the first component 12 and the second component 14. In some examples, the vacuum chamber 22 may include a window that is transparent to the laser beam emitted by the laser system 40. Additionally or alternatively, where the power beam welding apparatus 20 includes the electron beam welding system 42, the electron beam welding system 42 may be mounted to the interior of the vacuum chamber 22 or may be integrated into a wall of the vacuum chamber 22, such that the beam leaves the electron gun to enter the low pressure region in front of the workpiece sustained by the vacuum chamber 22. The controller 16 may be configured to control the actuator arrangement 18 to move the vacuum chamber 22 to enclose the joint formed by the first component 12 and the second component 14.

The pump 24 is arranged to evacuate a volume defined by the vacuum chamber 22. The pump 24 may comprise any suitable vacuum pump, and may include, for example, a rotary vane pump, a diaphragm pump, or a momentum transfer pump. The controller 16 may be configured to control the pump 24 to form a vacuum in the volume defined by the vacuum chamber 22.

The welding apparatus 26 may comprise any suitable welding apparatus. For example, the welding apparatus 26 may comprise one or more of: oxy-fuel welding apparatus; shielded metal arc welding apparatus; gas tungsten arc welding apparatus; gas metal arc welding apparatus; flux-cored arc welding apparatus. The controller 16 may be configured to control the operation of the welding apparatus 26 to weld the first component 12 and the second component 14. In some examples, the apparatus 10 may not comprise the welding apparatus 26 and the power beam welding apparatus 20 may be the sole welding apparatus.

In some examples, the welding apparatus 26 may comprise robotics that enable movement of at least a part of the welding apparatus 26 relative to the first and second components 12, 14. In these examples, the controller 16 is configured to control the robotics of the welding apparatus 26 to move at least a part of the welding apparatus 26.

The filler 27 is used to weld the first component 12 and the second component 14 together. In some examples, the filler 27 may be a wire, tape or preform that is separate to the first component 12 and the second component 14. In other examples, the filler 27 may be an integral part of the first component 12 and/or the second component 14. The filler 27 may comprise any suitable material and may comprise the same material as the first component 12 and/or the second component 14. For example, the filler 27 may be a low carbon ferritic steel of similar chemical composition, carbon equivalent level and metallurgical cleanliness to the parent materials. Alternatively, the sealing weld filler 27 may be of a composition used for cladding, so as to give a corrosion resistant property, such as an austenitic stainless steel. In this case the inter-penetration would be controlled to limit the extent of the depth of the mixing of this composition into the chemistry of the weld metal of a joint between the first and second components 12, 14.

The human operator 28 may perform some, or all, of the methods described herein and as illustrated in Fig. 3. For example, the human operator 28 may operate the actuator arrangement 18 to move the first component 12 and/or the second component 14 into contact with one another. Furthermore, where the first and second components 12, 14 may be lifted by a human, the human operator 28 may also manually move the first component 12 and/or the second component 14. By way of another example, the human operator 28 may move the vacuum chamber 22 and operate the pump 24 to evacuate a volume formed between the vacuum chamber 22, the first component 12 and the second component 14. By way of a further example, the human operator 28 may operate the power beam welding apparatus 20 and/or the welding apparatus 26 to weld the first component 12 and the second component 14 together.

It should be appreciated that in some examples, the methods described herein and as illustrated in Fig. 3 may be fully automated (that is, the method steps may only be performed by the controller 16). In other examples, the methods described herein and as illustrated in Fig. 3 may be semi-automated (that is, some of the method steps may be performed by the controller 16 and the other method steps may be performed by the human operator 28). In further examples, the methods described herein and as illustrated in Fig. 3 may be performed manually (that is, the method steps may only be performed by the human operator 28). In these further examples, the apparatus 10 may not comprise the controller 16.

The operation of the apparatus 10 is described in the following paragraphs with reference to Fig. 3.

At block 44, the method includes controlling movement of the first component 12 and/or the second component 14 to form a joint. For example, the controller 16 may control the actuator arrangement 18 to move the first component 12 and/or the second component 14 to form a joint.

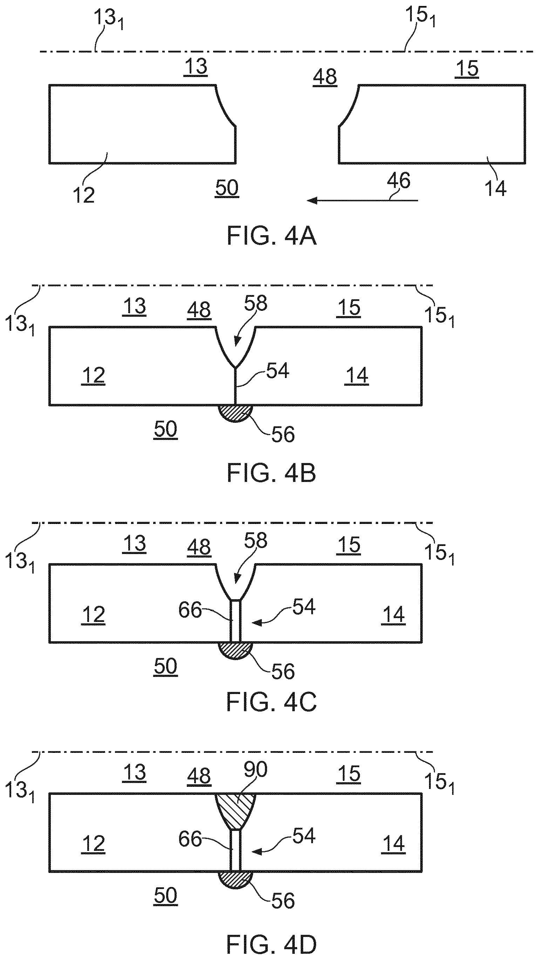

Fig. 4A illustrates a cross sectional side view of the nozzle 14 (illustrated in Fig. 2) being moved into contact with the reactor pressure vessel 12 (also illustrated in Fig. 2). The axis 15₁ of the nozzle 14 is moved into alignment with the axis 13₁ of one of the apertures 13 of the reactor pressure vessel 12 (so that the axis 15₁ is coincident with the axis 13₁) and the nozzle 14 is moved in the direction of arrow 46 into contact with the reactor pressure vessel 12.

The first component 12 and the second component 14 define a first side and a second side. In the example illustrated in Fig. 4A, the reactor pressure vessel 12 and the nozzle 14 define a first side 48 and a second side 50. The first side 48 is the interior of the aperture 15 of the nozzle 14 and the aperture 13 of the reactor pressure vessel 12. The second side 50 is the exterior of the nozzle 14 and the reactor pressure vessel 12.

At block 52, the method includes controlling welding of the first component 12 and the second component 14 using the filler 27 to form a seal weld to seal the joint. For example, the controller 16 may control the power beam welding apparatus 20 or the welding apparatus 26 to weld the first component 12 and the second component 14 on the second side 50 using the filler 27 to form a seal weld to seal the joint.

Fig. 4B illustrates a cross sectional side view of the nozzle 14 and the reactor pressure vessel 12 forming a joint 54. A seal weld 56 is formed at the joint 54 and extends circumferentially around the axes 13₁ and 15₁ to prevent (or wholly stop) gas molecules moving between the first side 48 and the second side 50 via the joint 54. The surfaces of the reactor pressure vessel 12 and the nozzle 14 that form the joint 54 define a cavity 58 there between that is open to the first side 48.

In some examples, the filler 27 may be tack welded ahead of the fusion zone in a continuous or pulsed manner (that is, the welding of the filler 27 is intermittent to provide 'spatial' pulses) during the welding at block 52. For example, the filler 27 may be spot welded and wrapped around the joint 54 progressively under a slight tension, which may minimize the gap width required for the filler 27 and may help to regulate the position of the filler 27. Tacking may limit the extent of any gap which might exist at the start or develop during the course of a weld through thermal expansions and contractions around the weld pool and solidifying weld metal.

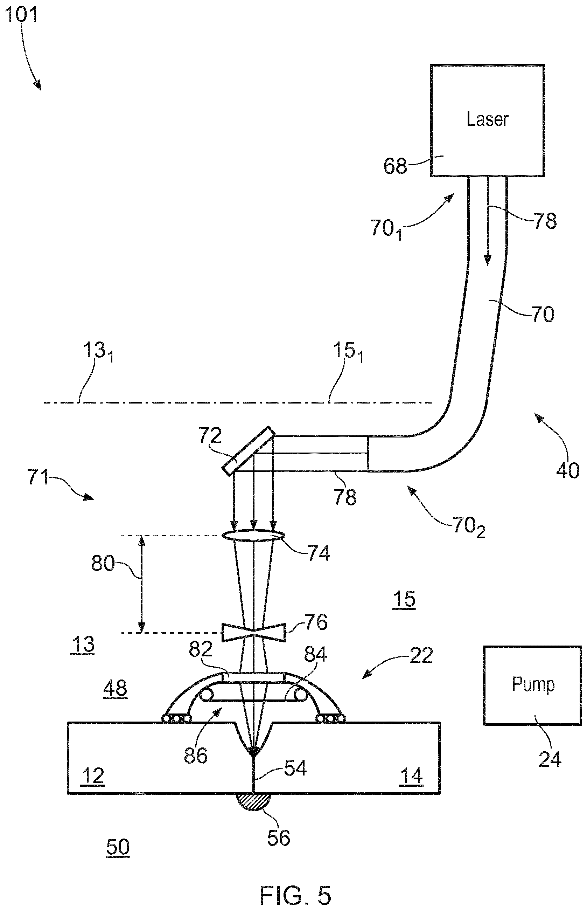

At block 60, the method includes controlling provision of the vacuum chamber 22 to enclose the joint. For example, the controller 16 may control the actuator arrangement 18 to move the vacuum chamber 22 into position to enclose the joint 54. An example of a vacuum chamber 22 is illustrated in Fig. 5 and is described in detail in the following paragraphs with reference to block 64.

At block 62, the method includes controlling evacuation of the volume defined by the vacuum chamber 22. For example, the controller 16 may control the pump 24 to form a vacuum or reduced atmospheric pressure in the volume defined by the vacuum chamber 22.

At block 64, the method includes controlling power beam welding of the joint 54 formed between the first component 12 and the second component 14. For example, the controller 16 may control the laser system 40 and/or the electron beam welding system 42 to weld the joint 54 from the first side 48 and through the evacuated volume.

In some examples, the power beam welding is keyhole welding where the first component 12 and the second component 14 are processed with very high beam intensities. The power beam creates a liquid and a vapour from the first and second components 12, 14. The vapour partially displaces the liquid which leads to the creation of a vapour capillary (which may be referred to as a keyhole). The seal weld 65 seals the volume defined by the vacuum chamber 22 which may advantageously improve the quality of the power beam weld 66.

Fig. 4C illustrates a cross sectional side view of the nozzle 14 and the reactor pressure vessel 12 having a power beam weld 66 (which may be a keyhole weld) at the joint 54. The power beam weld 66 extends to the second side 50 of the reactor pressure vessel 12 and the nozzle 14 (that is, the power beam weld 66 fully penetrates the reactor pressure vessel 12 and the nozzle 14), but does not extend into the seal weld 56. In other examples, the power beam weld 66 may only partially penetrate the reactor pressure vessel 12 and/or the nozzle 14 and may thus not extend to the second side 50 of the reactor pressure vessel 12 and/or the nozzle 14. In further examples, the power beam weld 66 may extend to the second side 50 of the reactor pressure vessel 12 and the nozzle 14 and partially penetrate the seal weld 56.

Fig. 5 illustrates a side view of apparatus 101 for welding a reactor pressure vessel 12 and a nozzle 14 together. The apparatus 101, the reactor pressure vessel 12 and the nozzle 14 are similar to the apparatus 10, the reactor pressure vessel 12 and the nozzle 14 illustrated in Figs. 1, 2, 4A, 4B, 4C and 4D and where the features are similar, the same reference numerals are used. The apparatus 101 comprises a laser system 40, a vacuum chamber 22, and a pump 24 for evacuating the vacuum chamber 22.

The laser system 40 includes a laser 68, an optical fibre cable 70, and an adjustable optical system 71 comprising a mirror 72, a convex lens 74, and a concave lens 76. In operation, the laser 68 emits a laser beam 78 into a first end 70₁ of the optical fibre cable 70. The laser beam 78 travels through the optical fibre cable 70 and is emitted at a second end 70₂ of the optical fibre cable 70. The laser beam 78 is then reflected by the mirror 72 and focussed by the convex lens 74 and the concave lens 76. The convex lens 74 and/or the concave lens 76 are moveable relative to one another (as indicated by arrow 80) to change the focal length of the laser beam 78. In some examples, the controller 16 may be configured to control an actuator to move the convex lens 74 and/or the concave lens 76 relative to one another to change the focal length of the laser beam 78.

The vacuum chamber 22 defines a ring shape and has an outer diameter that is sized to enable the vacuum chamber 22 to fit snugly within, and in contact with, the aperture 15 of the nozzle 14 and the aperture 13 of the reactor pressure vessel 12. The vacuum chamber 22 includes a window 82 comprising a material (such as glass) that is transparent to the laser beam 78, and a film 84 to protect the window 82 from vaporised material from the power beam weld. The vacuum chamber 22, the reactor pressure vessel 12 and the nozzle 14 define a volume 86 which may be evacuated by the pump 24.

It should be appreciated that the apparatus 101 may be used to weld other components together in accordance with the method illustrated in Fig. 3.

Furthermore, it should be appreciated that the vacuum chamber 22 may have a different structure and be positioned at an alternative location. For example, the vacuum chamber 22 may be arranged to be mounted on the reactor pressure vessel 12 and the nozzle 14 on the second side 50 (that is, the exterior surface of the nozzle 14). By way of another example, the vacuum chamber 22 may comprise ends caps for closing the openings of the apertures 13 and 15. A vacuum may be formed on the inside of the nozzle 14 by applying the end caps of the vacuum chamber 22 and evacuating the inside of the nozzle 14 using the pump 24.

The apparatus 101 is advantageous in that the optical fibre cable 70 may enable laser beam welding to be performed on the interior side 48 of the reactor pressure vessel 12 and the nozzle 14. The adjustable optical system 71 advantageously enables the focal length of the laser beam 78 to be changed without changing the positioning of the second end 70₂ of the optical fibre cable 70.

Returning to Fig. 3, at block 88 the method may include controlling welding of the joint 54 to at least partially fill the cavity 58 between the first component 12 and the second component 14. For example, the controller 16 may control the laser system 40 or the electron beam welding system 42 to weld the joint 54 to at least partially fill the cavity 58 between the first component 12 and the second component 14. Alternatively, the controller 16 may control the welding apparatus 26 to weld the joint 54 to at least partially fill the cavity 58 between the first component 12 and the second component 14.

Fig. 4D illustrates a cross sectional side view of the nozzle 14 and the reactor pressure vessel 12 having been welded together according to a first example. The power beam welding apparatus 20 or the welding apparatus 26 has filled the cavity 58 with material 90 through welding.

Subsequent to block 88, the first side 48 and/or the second side 50 may be machined to remove weld material protruding from the surfaces at the joint 54. For example, the second side 50 may be machined to remove the seal weld 56 from the reactor pressure vessel 12 and the nozzle 14. After heat treatment, the first component 12 and the second component 14 may be heat treated.

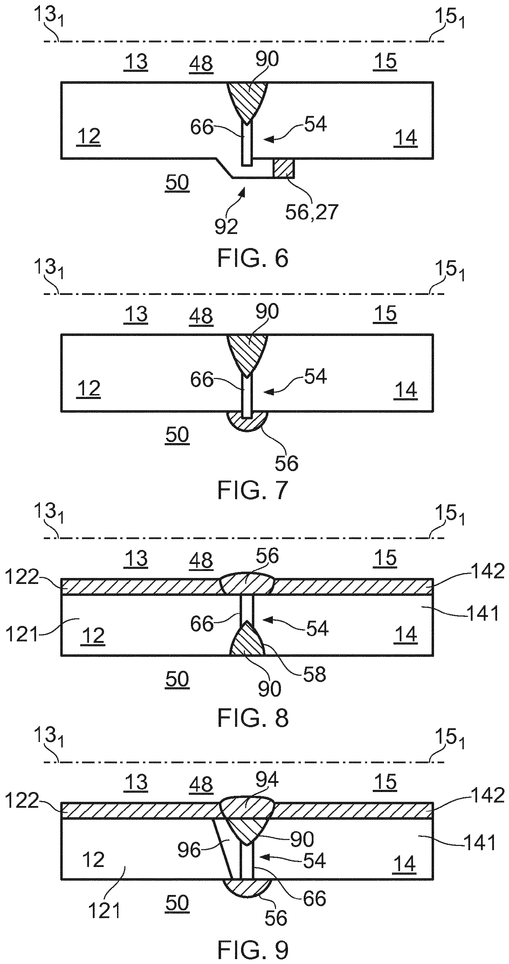

Fig. 6 illustrates a cross sectional side view of the reactor pressure vessel 12 and the nozzle 14 welded together according to a second example. The reactor pressure vessel 12 and the nozzle 14 are similar to the reactor pressure vessels 12 and the nozzles 14 illustrated in Figs. 2, 4A to 4D, and 5, and where the features are similar, the same reference numerals are used.

The reactor pressure vessel 12 illustrated in Fig. 6 differs from the reactor pressure vessels illustrated in Figs. 2, 4A to 4D, and 5 in that the reactor pressure vessel 12 includes a flange 92 that extends radially outwards from the second side 50 of the reactor pressure vessel 12. The flange 92 also extends axially outwards from the aperture 13 so that when the reactor pressure vessel 12 and the nozzle 14 are moved into contact with one another, the flange 92 extends across the second side 50 of the nozzle 14.

The flange 92 of the reactor pressure vessel 12 includes an integral filler 27 that may be welded at block 52 by the power beam welding apparatus 20 or the further welding apparatus 26 to form a seal weld 56. As illustrated in Fig. 6, the seal weld 56 is axially offset from the joint 54 between the reactor pressure vessel 12 and the nozzle 14.

The power beam weld 66 partially penetrates the flange 92 of the reactor pressure vessel 12 and fully penetrates the nozzle 14. The power beam weld 66 does not penetrate the seal weld 56 since the seal weld 56 is axially offset from the joint 54.

Fig. 7 illustrates a cross sectional side view of a reactor pressure vessel 12 and a nozzle 14 welded together according to a third example. The reactor pressure vessel 12 and the nozzle 14 are similar to the reactor pressure vessels 12 and the nozzles 14 illustrated in Figs. 2, 4A to 4D, 5 and 6 and where the features are similar, the same reference numerals are used. In this example, the power beam weld 66 fully penetrates the reactor pressure vessel 12 and the nozzle 14 and partially penetrates the seal weld 56.

Fig. 8 illustrates a cross sectional side view of a reactor pressure vessel 12 and a nozzle 14 welded together according to a fourth example. The reactor pressure vessel 12 and the nozzle 14 are similar to the reactor pressure vessels 12 and the nozzles 14 illustrated in Figs. 2, 4A to 4D, and 5 to 7, and where the features are similar, the same reference numerals are used.

In this example, the reactor pressure vessel 12 includes a first layer 121 and a second layer 122. The first layer 121 comprises a first material and the second layer 122 comprises a second material that is different to the first material. In some examples, the second material of the second layer 122 may be a cladding material for a reactor pressure vessel. The first material of the first layer 121 may be a low carbon ferritic pressure vessel steel and the second material of the second layer 122 may be a stainless steel or a nickel based alloy.

The nozzle 14 includes a first layer 141 and a second layer 142. The first layer 141 comprises a first material and the second layer 142 comprises a second material that is different to the first material. The first material of the first layer 141 may be the same as, or different to, the first material of the first layer 121. The second material of the second layer 142 may be the same as, or different to, the second material of the second layer 122. In some examples, the second material of the second layer 142 may be a cladding material for a reactor pressure vessel. The first material of the first layer 141 may be a low carbon ferritic pressure vessel steel. The second material of the second layer 142 may be a stainless steel or a nickel based alloy.

In this example, the seal weld 56 is provided on the first side 48 of the reactor pressure vessel 12 and the nozzle 14 (that is, the seal weld 56 is provided within the apertures 13, 15). The seal weld 56 comprises a material that may be the same as the second material of the second layer 122 and/or the same as the second material of the second layer 142. Consequently, the seal weld 56 may advantageously comprise a cladding material for a reactor pressure vessel.

In this example, the vacuum chamber 22 has been positioned around the second surface 50 of the reactor pressure vessel 12 and the nozzle 14 and the joint 54 has been power beam welded from the second side 50. Similarly, the joint 54 has been welded from the second side to provide the material 90 in the cavity 58.

Fig. 9 illustrates a cross sectional side view of a reactor pressure vessel 12 and a nozzle 14 welded together according to a fifth example. The reactor pressure vessel 12 and the nozzle 14 are similar to the reactor pressure vessels 12 and the nozzles 14 illustrated in Figs. 2, 4A to 4D, and 5 to 8, and where the features are similar, the same reference numerals are used.

In this example, the seal weld 56 is provided to the joint 54 on the second side 50. The power beam weld 66 and the material 90 are provided from the first side 48. Additional weld material 94 is provided on the material 90 from the first side 48 by the power beam welding apparatus 20 or by the further welding apparatus 26. The weld material 94 may be a cladding material for a reactor pressure vessel.

The reactor pressure vessel 12 comprises a material 96 at the joint 54 with the nozzle 14 for strengthening the weld between the reactor pressure vessel 12 and the nozzle 14. The material 96 is different to the first material of the first layer 121 and is different to the second material of the second layer 122. Additionally or alternatively, the nozzle 14 may comprise the material 96 at the joint 54 with the reactor pressure vessel 12 for strengthening the weld between the reactor pressure vessel 12 and the nozzle 14. The material 96 of the nozzle 14 is different to the material of the first layer 141 and is different to the second material of the second layer 142. The material 96 may be a steel optimised for a different temperature range and or corrosion resistance. The fabrication route for the material 96 may be different.

The apparatus 10, 101 and methods described in the present patent application may provide several advantages. First, the methods may be performed more quickly than arc welding the joint 54 because the power beam welding apparatus 20 may weld more quickly than an arc welding apparatus. Second, the methods may advantageously minimise strain and distortion in the reactor pressure vessel 12 and the nozzle 14 relative to an arc welding process. Third, where the power beam welding apparatus 20 includes the laser system 40, the methods may advantageously not generate X-rays. This may advantageously reduce or eliminate the need for lead shielding and thus improve accessibility to the joint between the first component and the second component. Fourth, where the laser system 40 includes an optical fibre cable (such as in apparatus 101 in Fig. 5), the optical fibre cable may allow remote and internal access to components.

It will be understood that the invention is not limited to the embodiments above-described and various modifications and improvements can be made without departing from the concepts described herein. For example, the controller 16 in different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. A method of welding a first component and a second component together, the method comprising:
controlling movement of a first component and/or a second component to form a joint, the first component and the second component defining a first side and a second side;
controlling welding of the first component and the second component on the second side using filler to form a seal weld to seal the joint;
controlling provision of a vacuum chamber to enclose the joint within a volume;
controlling evacuation of the volume defined by the vacuum chamber; and
controlling power beam welding of the joint, the power beam being provided from the first side and through the evacuated volume.

2. A method as claimed in claim 1, wherein the power beam weld partially penetrates the first component and the second component, and does not penetrate the seal weld.

3. A method as claimed in claim 1, wherein the power beam weld partially penetrates the seal weld.

4. A method as claimed in any of the preceding claims, wherein the filler is separate to the first component and the second component.

5. A method as claimed in any of claims 1 to 3, wherein the filler is integral to the first component and/or is integral to the second component.

6. A method as claimed in any of the preceding claims, wherein the first component includes a first layer comprising a first material and a second layer comprising a second material, the seal weld being formed on the second layer and comprising the second material.

7. A method as claimed in any of the preceding claims, wherein the first component comprises a third material at the joint, the third material for strengthening the weld between the first component and the second component.

8. A method as claimed in any of the preceding claims, wherein the first component and the second component define a cavity at the joint, the method comprising: controlling welding of the joint, subsequent to power beam welding, to at least partially fill the cavity.

9. A method as claimed in any of the preceding claims, wherein the first component is a reactor pressure vessel for a nuclear power station, and the second component is a nozzle for the reactor pressure vessel.

10. A method as claimed in any of the preceding claims, wherein the power beam welding is keyhole welding.

11. A method as claimed in any of the preceding claims, wherein the power beam welding is laser welding.

12. A method as claimed in any of claims 1 to 10, wherein the power beam welding is electron beam welding.

13. A computer program that, when read by a computer, causes performance of the method as claimed in any of the preceding claims.

14. A non-transitory computer readable storage medium comprising computer readable instructions that, when read by a computer, cause performance of the method as claimed in any of claims 1 to 12.

15. Apparatus for welding a first component and a second component together, the apparatus comprising a controller configured to perform the method as claimed in any of claims 1 to 12.
